# EUROPÄISCHE PATENTANMELDUNG

(11) **EP 0 987 589 A1**
(43) Veröffentlichungstag der Anmeldung: **22.03.2000**
(21) Anmeldenummer: 98117483.2
(22) Anmeldetag: 15.09.1998
(51) Int. Cl.: G03B 27/58, G03D 13/00

(54) **Zentrierende Fotomaterial-Spuleinrichtung**

(71) Anmelder: GRETAG IMAGING AG, CH-8105 Regensdorf (CH)
(72) Erfinder: Vogel, Reinhard, 40699 Erkrath (DE)
(74) Vertreter: Schwabe - Sandmair - Marx

(57) **Zusammenfassung**

Die vorliegende Erfindung betrifft eine zentrierende Fotomaterial-Spuleinrichtung zum Auf- bzw. Abwickeln von Fotomaterialband auf einen bzw. von einem Wickelkern mit einem Wickelkernsitz (210, 220), der zum Aufnehmen eines auf dem Wickelkernsitz verschiebbaren Wickelkerns (100) ausgebildet ist, wobei durch zwei in ihrer Bewegung gekoppelte Schiebeglieder, die sich zum Verschieben und Zentrieren eines auf dem Wickelkernsitz aufgenommenen und zwischen den Schiebegliedern positionierten Wickelkerns aufeinander gleichmäßig zu bewegen.

## Beschreibung

Die Erfindung betrifft eine zentrierende Fotomaterial-Spuleinrichtung nach dem Oberbegriff des Anspruches 1 sowie eine Fotomaterialquelle oder -senke mit einer derartigen Spuleinrichtung und eine Fotomaterial-Entwicklungsmaschine mit einer erfindungsgemäßen Spuleinrichtung und/oder der erfindungsgemäßen Fotomaterialquelle und/oder -senke.

Zum Auf- oder Abspulen von Fotomaterial wird üblicherweise eine Spule auf eine gegebene Haltevorrichtung aufgesteckt und das Fotomaterial über einen gegebenen Transportpfad zu- oder abgeführt. Um die gleiche Position der Spule zu gewährleisten, ist üblicherweise ein Anschlag für die Spule vorgesehen, so daß das Fotomaterialband bei einer gegebenen Stelle einem Transportpfad übergeben werden kann bzw. von diesem übernommen werden kann.

Häufig ist es jedoch erforderlich, Fotomaterialbänder, z.B. Filme oder Fotopapier, unterschiedlicher Breite aufzuspulen oder abzuspulen. Für diesen Fall werden dann Spulen unterschiedlicher Breite verwendet, deren Bordwände, die zur Führung des Bandes dienen, einen entsprechenden unterschiedlichen Abstand aufweisen. Werden Spulen unterschiedlicher Breite auf denselben Sitz bis zum Anschlag aufgesetzt, so bewirkt dies eine Verschiebung des Zentrums des Fotomaterialbandes relativ zum Anschlag und relativ zum gesamten Transportpfad. Dies kann unter gewissen Umständen unerwünscht sein. Zum Beispiel können gewisse Maschinen zum Verarbeiten von Fotomaterial erfordern, daß ein Fotomaterialband immer um eine vorgegebene Stelle zentriert zugeführt wird. Dies ist insbesondere dann der Fall, wenn eine optische Verarbeitung des Fotomaterialbandes erfolgt, bei der zur Verminderung optischer Verzeichnungsfehler das Band um eine optische Achse zentriert sein soll. Eine spätere seitliche Verschiebung des Fotomaterialbandes zur Zentrierung belastet das Fotomaterialband aufgrund der auf dieses dann seitlich wirkenden Kräfte.

Aus oben genannten Kräften wurden Aufspulsysteme und Abspulsysteme ersonnen, die ein Fotomaterialband einem Transportpfad oder einer Maschine unabhängig von der Breite des Bandes zentriert zuführen können oder von dieser Maschine zentriert aufnehmen können, um so die mechanische Belastung des Bandes möglichst gering zu halten.

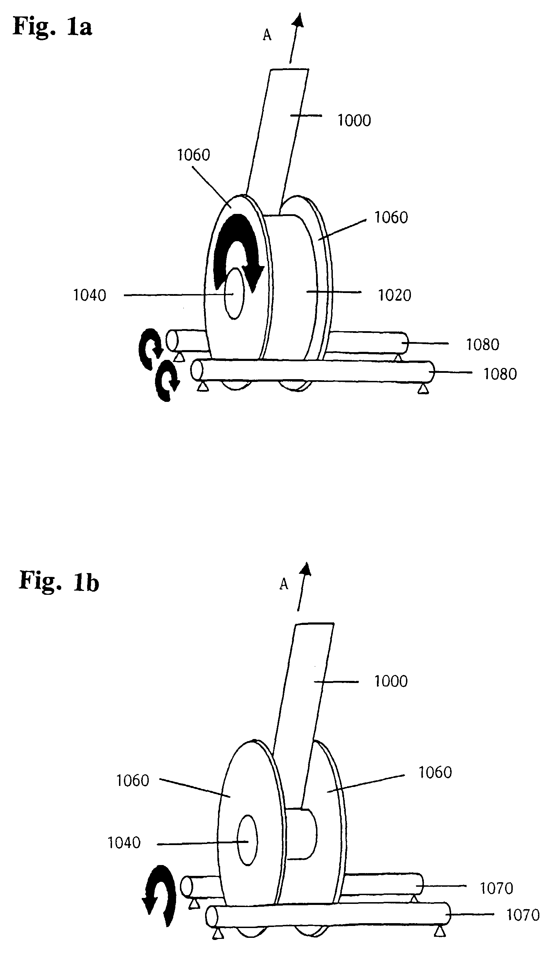

Ein herkömmliches Abspulsystem weist eine Spule mit einem eingelegten Papierwickel auf. Die Bordwände mit kreisrundem Umriß werden auf Achsen gelagert, die senkrecht zur Drehrichtung der Bordwände verlaufen (siehe Fig. 1a). Die Spule ist dadurch in Achsenrichtung frei verlagerbar, so daß ein abgeführtes Fotomaterialband durch Verlagern der Spule zentriert werden kann.

Nachteilig hieran ist, daß durch die freie Beweglichkeit der Spule entlang der Achsen diese in der Bewegungsrichtung nach einer erfolgten Zentrierung der Spule nicht fixiert ist und somit relativ zum Zentrum, z. B. aufgrund eines unruhigen Laufs des Fotomaterialbandes oder ungleichen Durchmessens der Bordwände wandern kann. Dadurch entstehen wiederum Seitenkräfte, die eigentlich vermieden werden sollten und die das Fotomaterialband beschädigen können.

Weiter kommt es in der Praxis häufig vor, daß die Spulen im Dunkeln zentriert werden müssen, um z.B. eine Belichtung eines nicht entwickelten Fotomaterials zu vermeiden. Im Dunkeln ist aber ein Zentrieren einer herkömmlichen Spule nur sehr schwer möglich. Nach dem Abspulvorgang muß der zurückgebliebene Wickelkern wieder aus der Spule entfernt werden, wozu die Bordwände abgenommen werden müssen.

Eine herkömmliche Abspulvorrichtung wird über die Zugkraft, die auf das Fotomaterialband wirkt, gedreht. Da die Zugkraft beim Abziehen des Fotomaterials variieren kann, werden die Variationen auf die Schwungmasse der Spule übertragen. Dadurch kommt es zu durch die Trägheit der Spule und der Papierwickelmasse bedingten Schwankungen beim Abziehen des Fotomaterials. Dies tritt insbesondere dann auf, wenn das Fotomaterialband zum Abspulen an ein Schleppband angeklammert wird, das das Fotomaterialband dann stark beschleunigt. Die dabei entstehenden Einschwingvorgänge belasten das Fotomaterialband stark und können es beschädigen. Außerdem können sich die dadurch erzeugten Geschwindigkeitsschwankungen in unerwünschter Weise auf den weiteren Transport des Fotomaterialbandes übertragen.

Ein bisher gebräuchliches Aufspulsystem benutzt die gleiche Spule wie die oben beschriebene Abspulvorrichtung. Zum Aufspulen wird ein Wickelkern in die Spule eingelegt, um den dann ein Fotomaterialband zur Ausbildung eines Fotomaterialwickels gewickelt wird. Im Gegensatz zu der Abspulvorrichtung werden bei der Aufspulvorrichtung die Bordwände nicht auf freilaufenden Achsen, sondern auf angetriebene Wellen gelegt. Diese übertragen über Reibschluß, insbesondere über Haftreibung eine Antriebskraft auf die Bordwände. Dadurch wird über die Bordwände eine Drehung des Wickelkerns erreicht, um Fotomaterial aufzuspulen.

Auch für die Aufspulvorrichtung gilt der oben beschriebene Nachteil, daß die Spule nach Zentrierung frei wandern kann, so daß auch beim Aufspulen das Fotomaterial mit ungewünschten Seitenkräften belastet werden kann. Auch muß, wie bei der Abspulvorrichtung, der Wickelkern nach vollendetem Aufwickelvorgang entfernt werden, wobei die Bordwände entfernt werden müssen. Dies liegt insbesondere daran, daß die Bordwände für eine Weiterverarbeitung des Fotomaterialwickels hinderlich sind und üblicherweise nur der Fotomaterialwickel mit innenliegendem Wickelkern der Weiterverarbeitung zugeführt wird.

Bei der herkömmlichen Aufspulvorrichtung ist auch die übertragbare Antriebskraft beschränkt. Wie bereits bemerkt, wird die Antriebskraft über Reibschluß übertragen. Aufgrund der Zugkraft des Papiers kann es jedoch zu einer unerwünschten Relativbewegung der Bordscheibenwandränder relativ zu den Wänden kommen, so daß ein Übergang von Haftreibung zu Gleitreibung erfolgt und somit plötzlich die Aufwickelgeschwindigkeit des Fotomaterials aufgrund der verringerten Antriebskraft stark abnimmt. Die Antriebswelle dreht also durch und das angelieferte Fotomaterialband wird nicht im gewünschten Umfang aufgenommen, so daß es zu einem Stau kommen kann. Weiter ist die Haftreibung zwischen den Bordwänden und den Wellen von dem Gewicht der Spule und des aufgewickelten Fotomaterials abhängig und verändert sich somit je nach Aufwickelzustand. Um die Risiken eines Fotomaterialbandstaus zu vermeiden, kann aus den oben genannten Gründen das Fotomaterialband nur relativ locker um den Wickelkern gewickelt werden, da ein unter Spannung stehendes Fotomaterialband über die dadurch bedingte Zugkraft die Haftreibung überwinden könnte und somit einen Stau verursachen können. Ein lockerer Papierwickel hat aber den Nachteil, daß sich bei unvorsichtiger Handhabung der Papierwickel von selbst auseinanderzieht und seine Seitenflächen nicht mehr fluchten. Auch kann dies bereits beim Aufspulen passieren, so daß die Seitenkanten des Fotomaterials an den Bordscheiben schleifen, womit das Fotomaterial beschädigt wird.

Aufgabe der Erfindung ist es, eine Fotomaterial-Spuleinrichtung bereitzustellen, die ein Fotomaterialband möglichst wenig belastet und dennoch einfach zu handhaben ist. Weiter sollen eine entsprechende Fotomaterialquelle oder -senke und eine Fotoentwicklungsmaschine mit denselben Eigenschaften bereitgestellt werden.

Die obenstehende Aufgabe wird durch die Gegenstände der Ansprüche 1, 11 und 12 gelöst. Vorteilhafte Weiterbildungen gehen aus den Unteransprüchen hervor.

Die erfindungsgemäße Fotomaterial-Spuleinrichtung weist einen Wickelkernsitz auf. Dieser ist zur Aufnahme eines Wickelkerns ausgebildet. Wickelkerne sind z. B. als Rollen ausgebildet und weisen üblicherweise eine insbesondere zylindrische Außenoberfläche auf, auf der ein Fotomaterialband aufgewickelt wird, nachdem der Wickelkern auf den Wickelkernsitz aufgeschoben ist. Um ein Aufschieben des Wickelkerns auf den Wickelkernsitz zu ermöglichen, ist bevorzugt die Außenoberfläche des Wickelkernsitzes zumindest abschnittsweise komplementär zur Innenoberfläche des Wickelkerns ausgebildet. So kann der Wickelkernsitz z.B. ebenfalls eine zylindrische Außenoberfläche aufweisen, wenn der Wickelkern eine zylindrische Innenoberfläche aufweist. Auch kann die Innenoberfläche des Wickelkerns Vorstehungen aufweisen, die in längs der Drehachse des Wickelkerns verlaufende Rillen in der Oberfläche des Wickelkernsitzes eingreifen. Auf diese Art und Weise kann ein Verdrehen des Wickelkernes relativ zu dem Wickelkernsitz um die Drehachse des Wickelkernes verhindert werden. Um hierbei das Aufschieben zu erleichtern, können sich die hierzu auf dem Wickelkernsitz vorgesehenen Rillierungen zunehmend verjüngen, so daß beim Aufschieben eines Wickelkerns dieser in eine formschlüssige Verbindung mit dem Wickelkernsitz übergeführt wird.

Auch kann der Wickelkern durch andere Art und Weise formschlüssig auf dem Wickelkernsitz fixiert werden. Zum Beispiel kann der Wickelkern Vertiefungen in seiner Innenoberfläche aufweisen, in die aus dem Wickelkernsitz ausfahrbare Stifte eingreifen, um den Wickelkern sowohl relativ zur Drehrichtung des Wickelkerns auf dem Wickelkern zu fixieren als auch in Verschiebungsrichtung des Wickelkerns auf dem Wickelkernsitz. Da, wie weiter unten beschrieben wird, der Wickelkern auf dem Wickelkernsitz erfindungsgemäß zentriert wird, kann die Lagebeziehung zwischen den Fixierungsfortsätzen und Fixierungsvertiefungen im zentrierten Zustand vorherbestimmt werden und die hierzu erforderliche Mechanik entsprechend ausgelegt werden. Dies gilt insbesondere dann, wenn durch Vorsehen der oben beschriebenen Rillierungen auf dem Wickelkernsitz und entsprechender Fortsätze auf der Innenoberfläche des Wickelkerns die Lage des Wickelkerns relativ zum Wickelkernsitz im aufgeschobenen Zustand auch in Drehrichtung des Wickelkerns festgelegt ist. Die Fixierung kann sowohl mechanisch erfolgen, wie oben beschrieben, sie kann aber auch z.B. mittels Magnetkräften erfolgen. Zum Beispiel kann der Wickelkernsitz Magnete aufweisen und der Wickelkern aus ferromagnetischem Material gebildet sein. Auch eine Abfolge von Nord- und Südpolen entlang der Umfangsrichtung des Wickelkernsitzes verhindert z. B. eine Drehung des Wickelkernes relativ zum Wickelkernsitz. Die somit erzielte kraftschlüssige Fixierung eines Wickelkerns auf dem Wickelkernsitz kann erfindungsgemäß auch auf andere Art und Weise erzielt werden, beispielsweise können hierzu die erfindungsgemäßen Schie beglieder eingesetzt werden, wie im folgenden näher beschrieben wird.

Vorteilhaft weist die erfindungsgemäße Spuleinrichtung Schiebeglieder auf, die dazu ausgebildet sind, einen auf dem Wickelkernsitz aufgeschobenen Wickelkern parallel zu einer Linie bzw. Gerade, entlang der der Wickelkern auf dem Wickelkernsitz verschoben wird, zu verschieben. Dazu kann die Oberfläche, die einen Wickelkern kontaktiert, z.B. flächig ausgebildet sein, um die Seitenkantenflächen des Wickelkerns flächig zu berühren und über Kontaktdruck dann zu verschieben. Auch kann die Kontaktfläche eines Schiebegliedes oder beider Schiebeglieder so ausgebildet sein, daß sich ein Formschluß zwischen Schiebeglied und Seitenkantenfläche des Wickelkerns ergibt, wobei hierzu die Seitenkantenfläche des Wickelkerns entsprechend ausgebildet wird. Durch konische Gestaltung von Fortsätzen und/oder Vertiefungen kann beim Annähern eines Schiebegliedes an eine Seitenkante des Wickelkerns eine Drehung des Wickelkerns bewirkt werden, um schließlich eine formschlüssige Verbindung herzustellen. Durch eine formschlüssige und/oder kraftschlüssige Fixierung kann eine Verdrehung des Wickelkerns im Kontakt mit dem Schiebeglied in Drehrichtung des Wickelkerns blockiert werden. Auch kann das Verschieben des Wickelkerns durch die Schiebeglieder berührungslos z.B. über magnetische Abstoßungskräfte erfolgen.

Erfindungsgemäß werden zwei Schiebeglieder vorgesehen, die sich in einer gekoppelten Bewegung aufeinander zu bewegen. Die Bewegung erfolgt entlang eines Pfades, entlang dem der Wickelkern auf dem Wickelkernsitz verschiebbar ist, so daß der Wickelkern verschoben wird, wenn die Schiebeglieder aufeinander zu bewegt werden, es sei denn, der Wickelkern ist bereits zentriert. Die Bewegung der Schiebeglieder erfolgt vorzugsweise symmetrisch zu einer Ebene, die senkrecht zur Linie der Verschiebung des Wickelkerns auf dem Wickelkernsitz verläuft. Durch das gleichmäßige Aufeinanderzubewegen der Schiebeglieder erfolgt dann eine Zentrierung des Wickelkerns um die genannte Ebene. Aufgrund der Bewegungskopplung zwischen den Schiebegliedern ist der Position eines Schiebegliedes eine bestimmte Position des anderen Schiebegliedes entlang des jeweiligen Verschiebeweges zugeordnet.

Ist der Wickelkern nach dem Aufschieben auf den Wickelkernsitz nicht zentriert, so schiebt das nächstgelegene Schiebeglied den Wickelkern, vorzugsweise in Kontakt mit einer Seitenkantenfläche des Wickelkerns, bis auch die andere Seitenkantenfläche des Wickelkerns das andere Schiebeglied berührt.

Durch die erfindungsgemäße Ausgestaltung der Schiebeglieder genügt es, einen Wickelkern einfach auf den Wickelkernsitz aufzuschieben, ohne auf die genaue Position des Wickelkernes zu achten. Durch ein Aufeinanderzubewegen der Schiebeglieder erfolgt dann eine Zentrierung des Wickelkerns auf dem Wickelkernsitz relativ zu einer vorgegebenen Ebene. Der Antrieb der Schiebeglieder kann über separate Elektromotoren erfolgen, die so gesteuert werden, daß die Schiebeglieder von vorgegebenen Ausgangsstellungen aus in einer gekoppelten Art und Weise sich gleichmäßig aufeinander zu bewegen. Die Kopplung der Bewegung kann auch mechanisch erfolgen. Insbesondere auch so, daß bei manueller Betätigung eines Schiebegliedes in Richtung auf einen Wickelkern sich das andere Schiebeglied in gleicher Weise (gleicher Geschwindigkeit) auf den Wickelkern von jeweiligen Ausgangsstellungen aus zu bewegt. Die mechanische Kopplung der Bewegung kann insbesondere über eine Spindel erfolgen, wie weiter unten noch näher ausgeführt wird.

Erfindungsgemäß wird eine vorgegebene Kraft zum Verschieben der Schiebeglieder bereitgestellt, so daß die Haft- und Gleitreibung des aufgeschobenen Wickelkerns beim Verschieben auf dem Wickelkernsitz überwunden werden kann. Vorzugsweise wird die Kraft so gewählt, daß sich ein Kraftschluß vorgegebener Stärke zwischen dem Wickelkern und den Schiebegliedern ergibt. Die Stärke des Kraftschlusses wird vorzugsweise so gewählt, daß eine vorgebene Antriebskraft zum Drehen des Wickelkerns von den Schiebegliedern auf den Wickelkern übertragen werden kann. Hierzu können z.B. die Oberfläche der Seitenkanten des Wickelkerns und der Schiebeglieder rau gestaltet werden.

Erfindungsgemäß kann der Wickelkern durch Fixieren des Wickelkerns auf dem Wickelkernsitz und/oder durch Fixieren mittels der Schiebeglieder zum Drehen angetrieben werden, wenn die Schiebeglieder und/oder der Wickelkernsitz gedreht wird. Auch können die Schiebeglieder mit dem Wickelkernsitz verbunden sein und der Wickelkernsitz kann sich mit den Schiebegliedern mitdrehen, wobei die Fixierung des Wickelkerns zur Antriebskraftübertragung mittels der Schiebeglieder erfolgt. Aufgrund der erfindungsgemäßen formschlüssigen und/oder kraftschlüssigen Fixierung des Wickelkernes relativ zu den Schiebegliedern und/oder dem Wickelkernsitz und bei kraftschlüssiger Fixierung aufgrund einer einstellbaren Stärke des Kraftschlusses kann eine Antriebskraft beliebiger Stärke (z. B. beliebige Presskraft der Schiebeglieder) auf den Wickelkern übertragen werden. Dadurch wird es ermöglicht, im Gegensatz zum Stand der Technik, den Abspulvorgang eines Fotomaterialwickels auf dem Wickelkern durch einen Antrieb aktiv zu unterstützen und somit zur gleichmäßigen Abwicklung des Wickelkerns beizutragen. Auch beim Aufwickeln des Wickelkerns kann ein Antriebskraft einstellbarer Stärke auf den Wickelkern ausgeübt werden, so daß Fotomaterial unter einer vorgegebenen Spannung, insbesondere unter einer höheren Spannung als dies beim Stand der Technik der Fall ist, auf den Wickelkern straff aufgespult werden kann.

Um einen Wickelkern vor dem Zentrieren bequem auf den Wickelkernsitz aufschieben zu können, ist vorzugsweise zumindest ein Schiebeglied zum Aufschieben des Wickelkerns aus dem dazu erforderlichen Raum, insbesondere in der Nähe der Oberfläche des Wickelkernsitzes entfernbar und nach dem Aufschieben wieder zuführbar. Vorzugsweise wird zumindest ein Schiebeglied so gestaltet, daß es in einer Ausgangsstellung der Schiebeglieder in eine dafür vorgesehene Vertiefung zum ungehinderten Aufschieben des Wickelkerns versenkt ist und über eine Mechanik während des Zusammenführens der Schiebeglieder aus der Versenkung herausfährt und somit von der Oberfläche des Wickelkernsitzes vorsteht, um einen aufgeschobenen Wickelkern zum Verschieben erfassen zu können.

Vorteilhaft ist der Wickelkernsitz zweiteilig ausgebildet und weist zwei Kernaufnahmen auf, wobei der Wickelkern auf beide Wickelkernaufnahmen geschoben wird. Die Wickelkernaufnahmen sind vorzugsweise so ausgebildet, daß eine Wickelkernaufnahme bis zu einem vorgesehenen Anschlag in die andere Wickelkernaufnahme eingeschoben werden kann. Vorzugsweise spannen die äußersten Umfangspunkte beider Wickelkernaufnahmen eine z.B. zylindrische Oberfläche auf, auf die ein Wickelkern aufschiebbar ist.

Vorzugsweise ist jeweils ein Schiebeglied mit einer Wickelkernaufnahme verbunden und die Verschiebung jedes Schiebegliedes mit der Verschiebung einer Wickelkernaufnahme gekoppelt. Vorzugsweise sind die Abmessungen der Wickelkernaufnahmen so gestaltet, daß bei einer gängigen Breite eines Wickelkerns der linke Randbereich des Wickelkerns auf der linken Wickelkernaufnahme aufsitzt und der rechte Randbereich des Wickelkerns auf der rechten Wickelkernaufnahme. Dadurch ergibt sich beim Zusammenschieben der mit den Wickelkernaufnahmen gekoppelten Schiebeglieder eine gute Führung des aufgeschobenen Wickelkerns, so daß einem Verkanten des Wickelkerns beim Verschieben entgegengewirkt wird.

Zum Koppeln der Bewegung der Schiebeglieder, die mit den beiden Wickelkernaufnahmen verbunden sind, ist vorzugsweise eine Spindel vorgesehen. Diese Spindel wird in Rotation versetzt, um die Schiebeglieder gleichmäßig auseinander bzw. aufeinander zu zu bewegen. Um dies zu erreichen, ist jede Wickelkernaufnahme mit einer innenliegenden Mutter versehen, die auf der Spindel aufsitzt. Weiter weist die Spindel ein Links- und Rechtsgewinde auf und eine Mutter ist mit einem Rechtsgewinde versehen und die andere mit einem Linksgewinde. Je nach Drehrichtung der Spindel werden somit die Muttern aufeinander zu bewegt oder auseinander bewegt, falls eine Drehung der Muttern verhindert bzw. gesperrt ist. Die Gewinde werden vorzugsweise so gestaltet, daß die Muttern bei Rotation der Spindel mit einer hinsichtlich des Betrags der Geschwindigkeit gleicher Geschwindigkeit bewegt werden.

Die Rotationssperre für die Muttern ist vorzugsweise entriegelbar. Ein Entriegeln der Sperre erfolgt vorzugsweise dann, wenn die Schiebeglieder den Wickelkern soweit verschoben haben, daß er zentriert ist. In diesem Zustand wirkt durch den Druck auf die Kanten des Wickelkerns eine Gegenkraft auf die Schiebeglieder, die gegen die Seitenkantenflächen eines Wickelkerns drücken. Diese Gegenkraft wird vorzugsweise detektiert, z.B. über die Antriebskraft, die erforderlich ist, um die Spindel zu drehen. In diesem Zustand erfolgt ein Lösen der Sperre, so daß sich bei einer weiteren Drehung der Spindel die Muttern zusammen mit den jeweiligen Wickelaufnahmen und den Schiebegliedern drehen, wobei der Wickelkern kraftschlüssig durch die Schiebeglieder gehalten wird. Der Drehsinn der Gewinde der Muttern und der Spindel wird vorzugsweise so gewählt, daß für den Fall einer Relativbewegung zwischen den Wickelkernseitenflächen und den Schiebegliedern aufgrund eines mangelhaften Kraftschlusses die Schiebeglieder weiter aufeinander zu bewegt werden, bis sich wieder ein Kraftschluß einstellt. Die Schiebeglieder ziehen sich also bei Drehung des Wickelkerns automatisch je nach erforderlicher Kraft um den Wickelkern zusammen, so daß immer ein Kraftschluß ausreichender Stärke zum Antreiben des Wickelkerns bereitgestellt wird.

Falls bei der Rotation des Wickelkerns Verzögerungen gegenüber der Rotation der Spindel auftreten, werden diese also über die Schiebeglieder und Kernaufnahmen auf die Muttern übertragen, so daß sich eine Relativbewegung zwischen Mutter und Spindel ergibt, die ein weiteres Zusammenziehen der Stifte um den Wickelkern bewirkt, bis sich der Wickelkern gleichmäßig mit der Spindel mitdreht.

Erfindungsgemäß wird weiter ein Fotomaterialpuffer vorgesehen. Dient die Spuleinrichtung als Abspuleinrichtung, so befindet sich der Fotomaterialpuffer auf der Abspulseite des Wickelkerns, das heißt das vom Wickelkern abgespulte Fotomaterialband wird über den Fotomaterialpuffer geleitet. Wird nun Fotomaterialband aus dem Fotomaterialpuffer unter Geschwindigkeitsschwankungen, z.B. im Rahmen eines Beschleunigungsvorganges herausgezogen, so kann der Fotomaterialpuffer Material zugeben, um so zu verhindern, daß die oben beschriebenen Trägheitskräfte aufgrund der Schwungmasse des Fotomaterialwickels auf das Fotomaterialband wirken (Einpendelvorgänge). Der abrupte Beschleunigungsvorgang kann somit gedämpft werden, um die gewünschte Geschwindigkeit möglichst ohne Schwankungen zu erreichen. Damit immer ausreichend Fotomaterialband im Fotomaterialpuffer vorhanden ist, wird erfindungsgemäß eine Steuereinrichtung vorgesehen, die die Geschwindigkeit steuert, mit der Fotomaterialband durch Drehung des Wickelkernsitzes und/oder der Schiebeglieder vom fixierten Wickelkern abgespult wird. Gemäß dem Stand der Technik war dies nicht möglich, da keine aktive Drehung des Wickelkernes bei der Abspulvorrichtung vorgesehen war.

Auch beim Aufspulen von Fotomaterialband wirkt der erfindungsgemäß vorgesehene Antrieb des Wickelkerns, der erheblich kräftiger ist als beim Stand der Technik, vorteilhaft mit dem Fotomaterialpuffer zusammen. Denn aufgrund der stärkeren Antriebskräfte zum Drehen des Wickelkerns, kann das Fotomaterialband im Fotomaterialpuffer unter eine deutlich stärkere Spannung gestellt werden, so daß ein strafferes Aufwickeln ermöglicht wird.

Ein weiterer Vorteil der Erfindung ist, daß keine Bordscheibenwände aufgrund der straffen Wicklung erforderlich sind und somit auch nicht entfernt werden müssen, um einen Wickelkern abzunehmen. Der Wickelkern kann also sofort mit aufgewickeltem Papierwickel von der erfindungsgemäßen Spuleinrichtung abgenommen werden oder direkt aufgesetzt werden.

Die erfindungsgemäße Spuleinrichtung wird vorteilhaft zum Ausbilden einer erfindungsgemäßen Fotomaterialquelle und/oder -senke eingesetzt. Diese weist die erfindungsgemäße Spuleinrichtung mit aufgesetztem Wickelkern auf. Befindet sich Fotomaterial auf dem Wickelkern, so wird dieses zu einem Einlaß bzw. Ausläß geführt, vorteilhaft insbesondere über den oben erwähnten Fotomaterialpuffer. Ein wesentlicher Vorteil der erfindungsgemäßen Fotomaterialquelle oder -senke ist, daß ein Wickelkern mit oder ohne Fotomaterialband leicht aufgesetzt und entfernt werden kann und aufgrund der Zentrierung des Wickelkernes das Fotomaterialband immer genau zentriert aufgenommen oder abgegeben werden kann.

Die oben beschriebene Spuleinrichtung und/oder die oben beschriebene Fotomaterialquelle und/oder -senke werden vorteilhaft insbesondere bei einer Fotoentwicklungsmaschine eingesetzt. Dabei ist insbesondere die Zentrierung beim Einlegen eines Fotomaterialwickels in die erfindungsgemäße Spuleinrichtung von Vorteil, da ein Einlegen aufgrund der Zentrierung leicht auch im Dunkeln ausgeführt werden kann. Wird die Spuleinrichtung bzw. Fotomaterialsenke abgabeseitig der Fotoentwicklungsmaschine eingesetzt, so können erheblich straffere und gleichmäßig gewickeltere (kein Breitenversatz) Fotomaterialbandwickel erzeugt werden.

Im folgenden wird unter Bezugnahme auf die Zeichnungen ein Ausführungsbeispiel der Erfindung beschrieben. Dabei werden weitere vorteilhafte Merkmale der Erfindung offenbart.
- Fig. 1a: zeigt ein Abspulsystem nach dem Stand der Technik.
- Fig. 1b: zeigt ein Aufspulsystem nach dem Stand der Technik.
- Fig. 2: zeigt einen Längsschnitt durch einen erfindungsgemäße Spuleinrichtung.
- Fig. 3: zeigt einen Querschnitt durch die erfindungsgemäße Spuleinrichtung und insbesondere den Versenkmechanismus für ein Schiebeglied.
- Fig. 4: zeigt einen Mechanismus zum Blockieren der Sperreinrichtung.
- Fig. 5: zeigt das Prinzip einer Tänzersteuerung.

In Fig. 1a ist ein Abspulsystem nach dem Stand der Technik gezeigt. Ein Fotomaterialband 1000 wird entlang einer Richtung A mit einer vorgegebenen Zugkraft, z.B. mittels eines Schleppbandes oder Leaderbandes, von einem Fotomaterialwickel 1020 abgezogen. Der Fotomaterialwickel befindet sich auf einem Wickelkern 1040 und wird durch kreisförmige Bordscheiben 1060 seitlich begrenzt. Die Bordscheiben 1060 liegen auf drehbaren Achsen 1080 auf. Die Spule mit den Bordscheiben 1060 und dem Wickelkern 1040 ist quer zu ihrer Drehrichtung entlang der Achsen 1080 verschiebbar.

Das Abspulsystem nach dem Stand der Technik stellt im Gegensatz zur vorliegenden Erfindung keine automatische Zentrierung bereit und neigt dazu, entlang der Achsen zu wandern.

Fig. 1b zeigt ein Aufspulsystem nach dem Stand der Technik. Das Fotomaterialband 1000 wird entgegen einer Richtung A aufgespult. In die Richtung A wirkt eine Zugkraft des Fotomaterialbandes. Diese ist erforderlich, um das Fotomaterialband straff aufzuwickeln. Gleiche Teile, wie in Fig. 1a, sind mit gleichen Bezugszeichen versehen. Jedoch sind anstelle der Achsen 1080 Wellen 1070 vorgesehen, die eine Antriebskraft auf die Bordscheiben 1060 übertragen, um das Fotomaterialband aufzuwickeln. Wie bereits oben ausgeführt, ist die übertragbare Antriebskraft jedoch gering und hängt von dem Füllzustand und der damit zusammenhängenden Gewichtskraft der Spule ab.

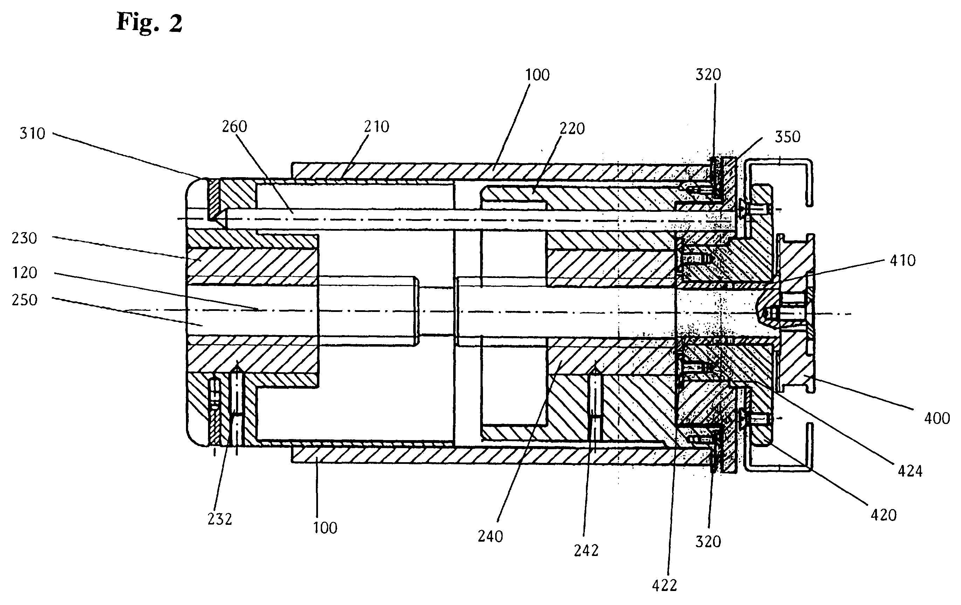

Fig. 2 zeigt die erfindungsgemäße Spuleinrichtung im Längsschnitt durch die Spindelachse 120 der Spindel 250. Die Spindel 250 wird über eine Riemenscheibe 400 angetrieben. Auf der antreibbaren Spindelachse 250, direkt neben der Riemenscheibe 400, ist eine Sperrenhalterung 420 drehbar um die Spindelachse 250 gelagert. Diese Sperrenhalterung 420 nimmt eine Sperre 350 dergestalt auf, daß eine Verschiebung der Sperre 350 in Axialrichtung aufgrund der Kanten 422 und 424 verhindert ist.

Die Spuleinrichtung der Fig. 2 befindet sich in einem Ausgangszustand, wobei bereits ein Wickelkern 100 auf die Kernaufnahmen 210 und 220 der Spuleinrichtung aufgeschoben wurde. Der Wickelkern 100 stößt rechts an das rechte Schiebeglied 320. Das linke Schiebeglied 310 ist noch in der Kernaufnahme 210 versenkt. Die rechte Kernaufnahme 220 ist mit einer Mutter 240 über einen Stift 242 drehfest verbunden. Entsprechendes gilt für die Mutter 230, die über einen Stift 232 mit der Kernaufnahme 210 drehfest verbunden ist.

Ein Stift 260 durchdringt beide Kernaufnahmen 210 und 220 und die Sperre 350. Wird somit die Sperre 350 an einer Drehung um die Achse 120 gehindert, können sich auch die Muttern 230 und 240 nicht um die Spindelachse drehen.

Die Spindelachse 250 weist ein Linksgewinde und ein Rechtsgewinde auf. Die Mutter 230 weist ein Linksgewinde auf und die Mutter 240 weist ein Rechtsgewinde auf, oder umgekehrt. Eine Drehung der Spindel um die Spindelachse bewirkt somit je nach Drehsinn, ein Aufeinanderzubewegen der Muttern oder ein Auseinanderbewegen der Muttern, falls ihre Drehung aufgrund einer festgehaltenen Sperre 350 über den Stift 260 blockiert wird.

Wird die Sperre 350 nicht an einer Drehung um das Lager 410 gehindert, drehen sich die Muttern mit der Spindelachse mit.

Das linke Schiebeglied 310 ist in der Fig. 2 in der Kernaufnahme 210 versenkt. Falls die Kernaufnahmen durch Drehen der Spindel aufeinander zu bewegt werden, schiebt die linke Spitze des Stiftes 260 das linke Schiebeglied 310 aus der linken Kernaufnahme 210 heraus. Der Wickelkern wird durch das rechte Schiebeglied 320 nach links geschoben, während sich das linke Schiebeglied, das nun von der Kernaufnahme 210 hervorsteht, auf die linke Kante des Wickelkerns 100 zu bewegt. Dieser Vorgang dauert an bis sowohl das linke Schiebeglied als auch das rechte Schiebeglied an der linken bzw. rechten Seite des Wickelkerns 100 anliegen.

In dem oben genannten Zustand nimmt nun das von einem Antriebsmotor aufzubringende Drehmoment zum Drehen der Spindelachse zu. Dadurch kann festgestellt werden, daß nun der Wickelkern 100 durch das linke Schiebeglied 310 und das rechte Schiebeglied 320 kraftschlüssig auf den Kernaufnahmen 210 und 220 gehalten wird. Die Kernaufnahme 220 weist abschnittsweise einen kleineren Außendurchmesser auf als die Kernaufnahme 210, und zwar dergestalt, daß die Kernaufnahme 220 in die Kernaufnähme 210 bereichsweise eingeschoben werden kann.

Soll der Wickelkern 100, der nun kraftschlüssig durch die Schiebeglieder 310 und 320 gehalten wird, in Rotation versetzt werden, muß nun lediglich ein freies Drehen der Sperre 350 um die Achse 120 ermöglicht werden und die Spindel 250 weiter angetrieben werden, denn dann verhindert der Stift 260 nicht mehr die Drehung der Muttern und Kernaufnahmen, sondern rotiert ebenfalls um die Spindelachse.

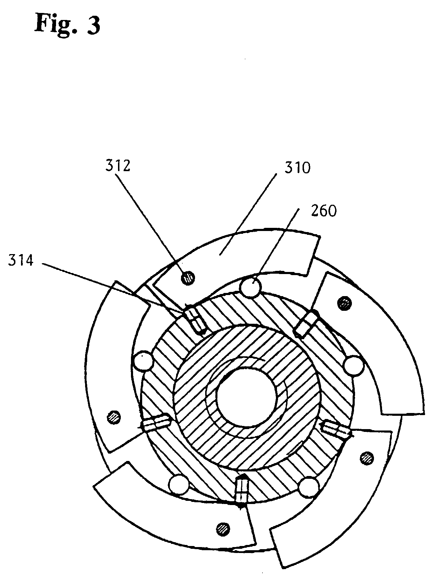

Fig. 3 stellt einen Querschnitt entlang einer Linie dar, die in Fig. 2 von oben nach unten durch das Schiebeglied 310 verläuft.

Das Schiebeglied 310 wird aufgrund einer schräg gestalteten Anstoßfläche des Stiftes 260 und einer entsprechend gestalteten gegenüberliegenden Fläche des Schiebeglieds 310 nach außen gedrückt, wenn die Kernaufnahme 210 in Richtung auf die Kernaufnahme 220 bewegt wird. Dabei dreht sich das linke Schiebeglied 310 um einen Drehpunkt 312, so daß das Schiebeglied 310 von der Außenoberfläche der Kernaufnahme 210 hervorsteht, um den Wickelkern 100 erfassen zu können.

In der in Fig. 2 gezeigten Position ist das Schiebeglied 310 aufgrund der Wirkung der Feder 314 versenkt, die das Schiebeglied 310 in eine Ausgangsposition drückt, solange nicht der Stift 260 wirkt.

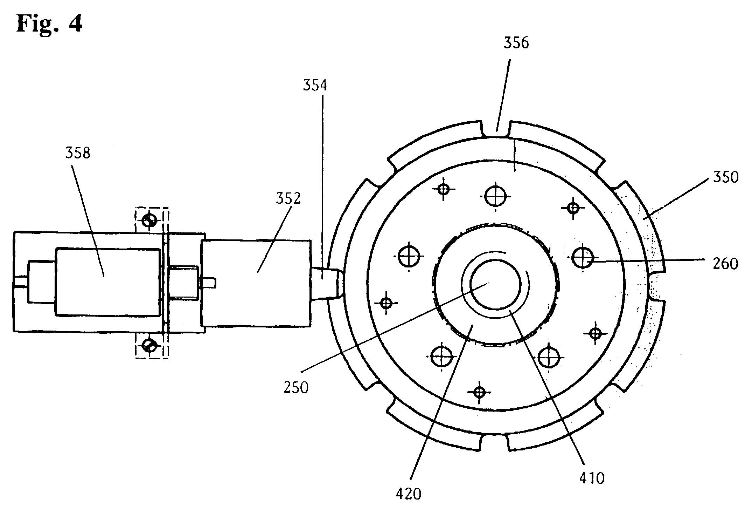

Fig. 4 zeigt einen Mechanismus zum Verhindern einer Drehbewegung der Sperre 350 zusammen mit der Sperrenhalterung 420 um das Lager 410. Wie oben, bezeichnen gleiche Bezugszeichen gleiche Teile. Ein Sperrschieber 352 schiebt einen Bolzen 354 in eine Nut 356 unter Wirkung eines Hubmagneten 358 und verhindert somit eine Rotation der Sperre 350, wenn sich die Spindelachse 250 dreht. Wird der Bolzen 354 zurückgeschoben, kann sich die Sperre 350 frei drehen. Die Drehbewegung wird von der Spindel auf die Muttern zu der Kernaufnahme und von dort auf den Stift 260 zu der Sperre 350 übertragen und durch diese nun nicht mehr blockiert.

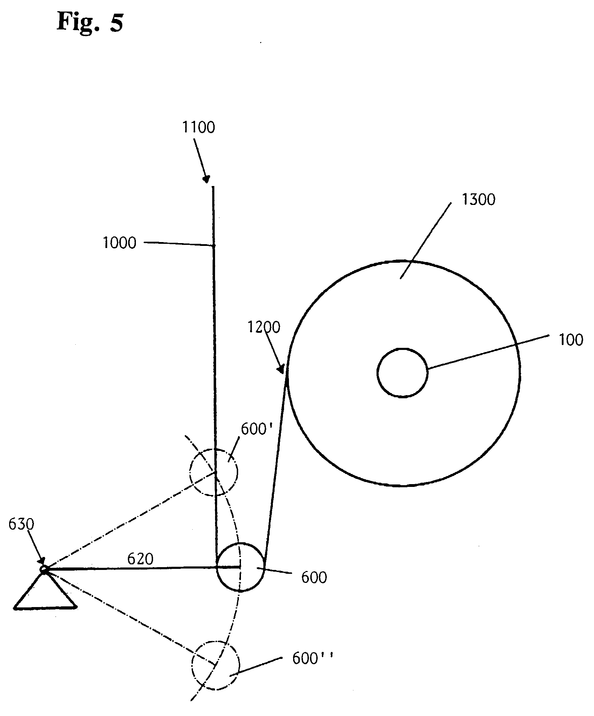

Fig. 5 zeigt einen Pufferspeicher für Fotomaterial, der in der gezeigten Ausführungsform mit nur einer Umlenkrolle 600, die auch als Tänzerrolle oder "Tänzer" bezeichnet wird. Das Fotomaterialband 1000 wird über die Tänzerrolle 600 umgeleitet. Je nach Lage der Tänzerrolle verlängert sich die Länge des Fotomaterialbandes zwischen der Stelle 1100 und der Stelle 1200. Diese Länge wird zur Pufferung des Fotomaterials verwendet. An der Stelle 1200 geht das Fotomaterialband in einen Fotomaterialwickel 1300 über, das mit einem Wickelkern 100 auf dem Wickelkernsitz der erfindungsgemäßen Spuleinrichtung sitzt.

Über die Position der Tänzerrolle 600, die durch ihr Eigengewicht das Fotomaterial spannt, läßt sich die Länge des zur Pufferung bereitstehenden Fotomaterialbandes bestimmen. Außerdem läßt sich über das Gewicht der Tänzerrolle z.B. beim Aufspulen des Fotomaterialbandes die gewünschte Zugspannung vorgeben.

Die Position der Tänzerrolle 600 läßt sich z.B. mittels eines Armes 620 bestimmen, der bei 630 gelagert ist. Der Arm 620 kann z.B. mit einem Potentiometer gekoppelt sein und je nach Drehstellung des Potentiometers läßt sich die Drehgeschwindigkeit des angetriebenen Wickelkerns verändern.

Wird die in Fig. 5 gezeigte Anordnung z.B. beim Abspulen von Fotomaterial verwendet, so wird vorzugsweise bei einem Anheben des Tänzers, z.B. in die obere strichtpunktiert gezeichnete Stellung 600', die Abwickelgeschwindigkeit durch Erhöhen der Drehgeschwindigkeit des Wickelkerns bzw. der Spindeldrehung erhöht, um die Länge des Fotomaterialbandes im Speicher wieder zu erhöhen. Nimmt der Tänzer eine mit 600'' bezeichnete tiefer liegende Stellung ein, so ist mehr Bandmaterial vorhanden, so daß vorzugsweise die Abwickelgeschwindigkeit verlangsamt werden kann. Auf die beschriebene Art und Weise lassen sich stark schwankend Zugkräfte auf das Fotomaterialband vermeiden, wodurch das Fotomaterialband geschont wird.

## Patentansprüche

1. Zentrierende Fotomaterial-Spuleinrichtung zum Auf- bzw. Abwickeln von Fotomaterialband auf einen bzw. von einem Wickelkern mit einem Wickelkernsitz (210, 220), der zum Aufnehmen eines auf dem Wickelkernsitz verschiebbaren Wickelkerns (100) ausgebildet ist,
**gekennzeichnet** durch zwei in ihrer Bewegung gekoppelte Schiebeglieder, die sich zum Verschieben bzw. Zentrieren eines auf dem Wickelkernsitz aufgenommenen und zwischen den Schiebegliedern positionierten Wickelkerns bewegen.

2. Zentrierende Fotomaterial-Spuleinrichtung nach Anspruch 1, dadurch **gekennzeichnet**, daß die Schiebeglieder zum form- und/oder kraftschlüssigen Fixieren eines zentrierten Wickelkerns ausgebildet sind.

3. Zentrierende Fotomaterial-Spuleinrichtung nach Anspruch 2, dadurch **gekennzeichnet**, daß die beiden Schiebeglieder (310, 320) gegen eine vorgegebene Kraft aufeinander zu bewegbar sind, um ein kraftschlüssiges Halten eines aufgenommenen und mittels der Schiebeglieder zentrierten Wickelkerns zu ermöglichen.

4. Zentrierende Fotomaterial-Spuleinrichtung nach Anspruch 3, dadurch **gekennzeichnet**, daß die Schiebeglieder mit dem Wickelkernsitz verbunden sind.

5. Zentrierende Fotomaterial-Spuleinrichtung nach Anspruch 4, dadurch g**ekennzeichnet**, daß zumindest ein Schiebeglied in seiner Ausgangsstellung im Wickelkernsitz eingetaucht ist und beim Zusammenfahren der Schiebeglieder zum Schieben und Zentrieren eines aufgenommenen Wickelkerns aus dem Wickelkernsitz herausfährt.

6. Zentrierende Fotomaterial-Spuleinrichtung nach Anspruch 1 bis 5, dadurch **gekennzeichnet**, daß der Wickelkernsitz und/oder die Schiebeglieder zum Drehen eines zentrierten Wickelkerns ausgebildet sind, um Fotomaterial vom Wickelkern auf- oder abzuspulen.

7. Zentrierende Fotomaterial-Spuleinrichtung nach Anspruch 1 bis 6, dadurch g**ekennzeichnet**, daß der Wickelkernsitz zwei zum Aufschieben und Verschieben eines Wickelkerns ausgebildete Wickelkernaufnahmen (210, 220) aufweist, die entlang der Verschiebungsachsenlinie verschiebbar sind und jeweils mit einem Schiebeglied verbunden sind.

8. Zentrierende Fotomaterial-Spuleinrichtung nach Anspruch 7, dadurch **gekennzeichnet**, daß eine Spindel (250) mit Links- und Rechtsgewinde, eine Mutter (230) mit Linksgewinde, eine Mutter (240) mit Rechtsgewinde und eine lösbare Sperreinrichtung (260, 350) vorgesehen ist, die ein Drehen der Muttern um die Spindel verhindert, wobei die Muttern voneinander beabstandet auf der Spindel sitzen und jeweils eine Mutter und jeweils ein Schiebeglied mit einer der beiden Wickelkernaufnahmen verbunden ist.

9. Zentrierende Fotomaterial-Spuleinrichtung nach Anspruch 8, dadurch **gekennzeichnet**, daß die Sperreinrichtung gelöst wird, wenn ein vorbestimmtes Drehmoment zum Drehen der Spindel überschritten wird.

10. Zentrierende Fotomaterial-Spuleinrichtung nach Anspruch 1 bis 9, **gekennzeichnet** durch einen Fotomaterialpuffer, der Fotomaterialband speichert und über welchen Fotomaterialband zu einem Wickelkern zuführbar oder abführbar ist, und durch eine Steuereinrichtung, die die Rotation des Wickelkernsitzes und/oder der Schiebeglieder zur Bandaufnahme vom Puffer oder zur Bandabgabe zum Puffer so steuert, daß einer Bandlängenänderung im Pufferspeicher durch Änderung der Rotationsgeschwindigkeit entgegengewirkt wird.

11. Fotomaterialquelle zum Abgeben und/oder Fotomaterialsenke zum Aufnehmen von Fotomaterialband, mit einer Fotomaterial-Spuleinrichtung nach Anspruch 1 bis 10 und einem von dem Wickelkernsitz aufgenommmenen Wickelkern, um den Fotomaterialband gewickelt ist oder wickelbar ist.

12. Fotoentwicklungsmaschine zum Entwickeln von Fotomaterial, insbesondere Fotopapier mit einer Fotomaterial-Spuleinrichtung nach Anspruch 1 bis 10 oder einer Fotomaterialquelle und/oder -senke nach Anspruch 11.
